# EUROPEAN PATENT APPLICATION

(11) **EP 4 246 342 A1**
(43) Date of publication of application: **20.09.2023**
(21) Application number: 22305323.2
(22) Date of filing: 18.03.2022
(51) Int. Cl.: G06F 16/2455

(54) **CACHE UPDATE ADAPTATION**

(71) Applicant: Amadeus S.A.S., 06410 Biot (FR)
(72) Inventor: HAMON, Kevin, Coppell, TX (US); HE, Yucheng, Arlington, MA (US); DURRMANN, Patrick, Boston, MA (US); RAYMOND, Stephanie, 06740 Chateauneuf-Grasse (FR)
(74) Representative: Samson & Partner Patentanwälte mbB

(57) **Abstract**

The subject disclosure relates to methods and systems of processing queries in a database system and adapting a polling decision in the database system. For example, the method of adapting the polling decision comprises: processing a plurality of queries, the plurality of queries comprising a plurality of search queries to search for pieces of data in accordance with the polling decision and a plurality of modification queries to modify pieces of the original data in the original data source; selecting search queries from among the plurality of search queries; for each of the search queries selected: retrieving a first piece of the cached data matching the selected search query; retrieving a first piece of the original data matching the selected search query; and determining whether the first piece of the cached data coincides with the first piece of the original data; selecting modification queries from among the plurality of modification queries; for each of the modification queries selected: determining whether the selected modification query is associated with a search query from among the selected search queries for which it was determined that the first piece of the cached data does not coincide with the first piece of the original data; and adapting the probabilistic model based on the results of the determinations with respect to the selected modification queries using a machine learning algorithm.

## Description

### TECHNICAL FIELD

The subject disclosure generally relates to computers and computer software, and in particular to a method, apparatus, and computer program product of adapting a polling decision in a database system.

### BACKGROUND

Recent developments in database technology show that it is a common issue to ensure short response times to search queries which require processing large volumes of data. For example, such processing has to be performed in response to so-called "open queries" which contain only little input information (e.g., only one or two parameters out of a dozen possible parameters are specified and/or the specified value ranges of the parameters are broad) and, consequently, lead to a large number of results in general. Possibilities to speed up data processing by increasing hardware performance are limited. Thus, attention is drawn to improving the mechanisms underlying the processing of large data volumes.

One general approach to shorten response times to queries is to pre-compute or pre-collect result to search queries and maintain them in a cache. Search queries are then actually not processed on the large volumes of data, but on the results as maintained in the cache.

Caching, however, has a drawback, namely that the results maintained in the cache may become outdated due to changes in the data from which the results have been pre-computed or pre-collected and thus differ from that data. It is thus an issue to keep the pre-computed or pre-collected results up to date in order to ensure that queries returned by the results from the cache correctly reflect the corresponding data among the volumes of data. Strategies for keeping the cache up to date, that is the results maintained in the cache, are thus needed.

Various relatively simple strategies for keeping the cache up to date, as they are known in the prior art, concern, for example, re-computing or re-collecting the entire results maintained in the cache frequently, establishing and maintaining re-computation or re-collection schedules manually and re-computing or re-collecting the results when they are considered outdated. In general, re-computing or re-collecting a large number of search results (or updating a cache) is a task consuming a substantial amount of computational resource as well as bandwidth resource. Thus, re-computation or re-collection techniques are sought to efficiently perform the re-computation or re-collection of the search results.

Another strategy to shorten the response times while ensuring validity of the search results with certain likelihood is discussed in EP 2 908 255 A1. According to this strategy, the validity of pre-computed or pre-collected search results is estimated and this validity estimation is utilized in order to return pre-computed or pre-collected search results to the client which are probably valid. More specifically, a method of handling queries in a database system having at least one client and at least one search platform is provided. The search platform maintains pre-computed search results which are associated which confidence factors. A confidence factor indicates a probability of the associated search result being valid. A query indicating at least one search criterion is received by the search platform. The search platform utilizes the confidence factors associated with the identified pre-collected search results to increase the mean probability of pre-collected search results being valid being returned to the client.

Further strategies are discussed in EP 3 550 447 A1 relating to a method of processing queries in a database system and adapting a probabilistic model based on pieces of cached data and pieces of the original data using a machine learning algorithm, and EP 3 771 998 A1 relating to a method of processing queries in a distributed database system, adapting a probabilistic model of a first client based on retrieved pieces of cached data and retrieved pieces of original data using a machine learning algorithm and making available the adapted probabilistic model to a second client.

### SUMMARY

According to a first aspect of the subject disclosure, a method of adapting a polling decision in a database system is provided. The database system comprises an original data source storing pieces of original data and a cache source storing pieces of cached data. Each piece of cached data is associated with a value indicating a probability that the piece of cached data coincides with a corresponding piece of original data. The value is derived from a probabilistic model. The polling decision indicates based on the value whether the piece of cached data is to be used or whether the corresponding piece of original data is to be polled from the original data source. The method comprises: processing a plurality of queries by the database system, the plurality of queries comprising a plurality of search queries to search for pieces of data in accordance with the polling decision and a plurality of modification queries to modify pieces of the original data in the original data source; selecting search queries from among the plurality of search queries; for each of the search queries selected: retrieving a first piece of the cached data matching the selected search query from the cache source; retrieving a first piece of the original data matching the selected search query from the original data source; and determining whether the first piece of the cached data coincides with the first piece of the original data. The method further comprises selecting modification queries from among the plurality of modification queries; and for each of the modification queries selected: determining whether the selected modification query is associated with a search query from among the selected search queries for which it was determined that the first piece of the cached data does not coincide with the first piece of the original data. The method further comprises adapting the probabilistic model based on the results of the determinations with respect to the selected modification queries using a machine learning algorithm.

According to an example of the method, if it is determined that the selected modification query is associated with a search query from among the selected search queries for which it was determined that the first piece of the cached data does not coincide with the first piece of the original data, the probabilistic model is adapted such that the polling decision indicates that the piece of original data matching said search query is to be polled from the original data source.

According to another example of the method, if it is determined that the selected modification query is associated with a search query from among the selected search queries for which it was determined that the first piece of the cached data coincides with the first piece of the original data, the probabilistic model is adapted such that the polling decision indicates that the piece of cached data matching said search query is to be used.

According to yet another example of the method, the search queries from among the plurality of search queries are selected randomly, at the time the respective search query is received from a client.

In the yet another example, the method further comprises, for each of the search queries selected: evaluating the value of the first piece of the cached data; if the value is below a given threshold, updating the first piece of the cached data by the first piece of the original data, and returning the first piece of the original data as a result to the client; and otherwise, returning the first piece of the cached data as the result to the client.

Further optionally, in the yet another example, the method further comprises, for each of the search queries not selected: retrieving a second piece of the cached data matching the not-selected search query from the cache source; evaluating the value of the second piece of the cached data; if the value is below the given threshold, retrieving a second piece of the original data matching the non-selected search query from the original data source, and updating the second piece of the cached data by the second piece of the original data. And, the method further comprises adapting the probabilistic model based on the first pieces of the cached and original data using the machine learning algorithm. Optionally, the method further comprises: if the accuracy value is below the given threshold, returning the second piece of the original data as a result to the client; and otherwise, returning the second piece of the cached data as the result to the client.

In the further example of the method, adapting the probabilistic model comprises adapting the probabilistic model based on the results of the determinations with respect to the selected search queries using the machine learning algorithm. Optionally, in the further example of the method, if it is determined for the selected search query that the first piece of the cached data coincides with the first piece of the original data and if it is determined that the selected search query is not associated with one of the plurality of modification queries, the probabilistic model is adapted such that the polling decision indicates that the piece of cached data matching said search query is to be used.

According to another example of the method, each modification query of the plurality of modification queries is associated with at least one of the plurality of search queries.

In other examples, the method further comprises, for each selected modification query: determining a search query from among the plurality of search queries that is associated with the selected modification query; retrieving a third piece of the cached data matching the determined search query from the cache source; retrieving a third piece of the original data matching the determined search query from the original data source; determining whether the third piece of the cached data coincides with the third piece of the original data; and if it is determined that the third piece of the cached data does not coincide with the third piece of the original data, adapting the probabilistic model using the machine learning algorithm.

In yet other examples of the method, determining whether the selected modification query is associated with the search query from among the selected search queries comprises one or more of the following: determining that the selected modification query and the search query are received from the same client; determining that the selected modification query is received within a given time period from the search query; determining whether the selected modification query comprises information associated with one or more search terms of the search query; and determining whether the selected modification query comprises information identifying the search query.

According to a second aspect of the subject disclosure, an apparatus in a database system is provided. The database system comprises an original data source storing pieces of original data and a cache source storing pieces of cached data. Each piece of cached data is associated with a value indicating a probability that the piece of cached data coincides with a corresponding piece of original data. The value is derived from a probabilistic model. The polling decision indicates based on the value whether the piece of cached data is to be used or whether the corresponding piece of original data is to be polled from the original data source. The apparatus comprises: at least one processor; and a memory including instructions. The instructions, when executed by the at least one processor, cause the apparatus to: process a plurality of queries, the plurality of queries comprising a plurality of search queries to search for pieces of data in accordance with the polling decision and a plurality of modification queries to modify pieces of the original data in the original data source; select search queries from among the plurality of search queries; for each of the search queries selected: retrieve a first piece of the cached data matching the selected search query from the cache source; retrieve a first piece of the original data matching the selected search query from the original data source; and determine whether the first piece of the cached data coincides with the first piece of the original data. The instructions, when executed by the at least one processor, further cause the apparatus to: select modification queries from among the plurality of modification queries; and for each of the modification queries selected: determine whether the selected modification query is associated with a search query from among the selected search queries for which it was determined that the first piece of the cached data does not coincide with the first piece of the original data. The instructions, when executed by the at least one processor, further cause the apparatus to: adapt the probabilistic model based on the results of the determinations with respect to the selected modification queries using a machine learning algorithm.

According to a third aspect of the subject disclosure, a computer program product is provided. The computer program product comprises instructions which, when executed by a computer, cause the computer to perform the method according to the first aspect and its examples.

According to a fourth aspect of the subject disclosure, a computer-readable medium is provided. The computer-readable medium has stored thereon the computer program product according to the third aspect.

The above summary presents a simplified summary in order to provide a basic understanding of some aspects of the methods and/or apparatuses discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### BRIEF DESCRIPTION OF THE DRAWINGS

The accompanying drawings illustrate various embodiments of the subject disclosure and, together with the general description given above, and the detailed description of the embodiments given below, serve to explain the embodiments of the subject disclosure. In the drawings, like reference numerals are used to indicate like parts in the various views.
FIG.1 shows an exemplary database system, in which a method of handling queries may be performed.
FIG. 2 shows an exemplary method of handling search queries in the exemplary database system of FIG. 1.
FIG. 3 shows an exemplary method of handling modification queries in the exemplary database system of FIG. 1.
FIG. 4 shows principles of the subject disclosure to adapt the polling decision.
FIG. 5 shows a method of processing queries and adapting the polling decision in accordance with the subject disclosure.
FIG.6 shows a schematic representation of a computer system in accordance with an embodiment.

### DETAILED DESCRIPTION

Before turning to the detailed description of embodiments, some more general aspects on involved techniques will be explained first.

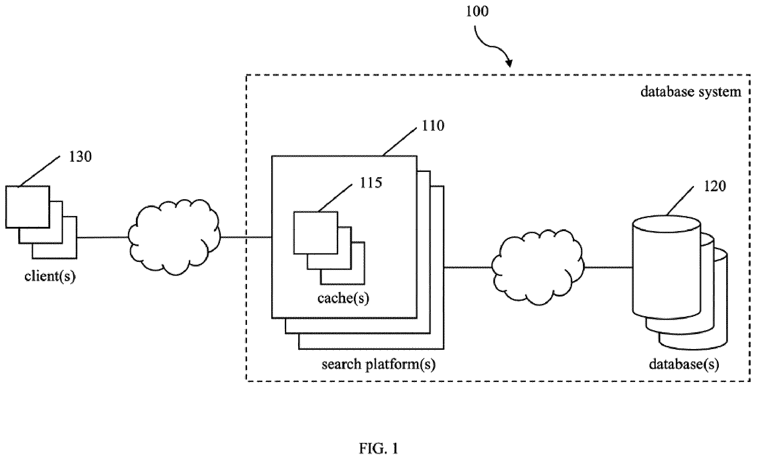

The subject disclosure generally pertains to handling queries in a database system and more specifically, to adapting a polling decision in the database system. The term "query" includes all types of database requests including, for example, read requests to search and retrieve data and write requests to insert, change or delete data. Hereinbelow, read requests will also be referred to as search requests or search queries to search data and write requests will also referred to as modification requests or modification queries to modify (i.e., insert, change or delete) data. An exemplary database system 100 for handling queries will now be described with reference to FIG. 1.

As shown in FIG. 1, the database system 100 includes at least one search platform 110 and at least one database 120. The at least one search platform 110 and the at least one database 120 may be located at the same location or distributed. In some examples, a plurality of search platforms 110 are present to increase failure safety or performance. There may also be a plurality of databases 120 to increase capacity or performance. The plurality of databases 120 may be located at one site or may be distributed over a plurality of sites. The at least one search platform 110 and the at least one database 120 are connected through a network such as a Local Area Network (LAN), a Metropolitan Area Network (MAN), or a Wide Area Network (WAN) such as the Internet.

The at least one database 120 stores original data. Herein, such databases 120 which store the original data are also referred to as original data source. In more detail, the at least one database 120 stores a plurality of pieces of original data. Here, the term "original data" means data that is valid and that forms the basis for all data processing within the database system 100. The search queries and/or modification queries are directed to the data. The term "database" here is meant to encompass any types of structured information storage system such as standard stand-alone databases like SQL or Non-SQL databases as well as complex, distributed and/or proprietary databases, relational databases or object-oriented databases. Finally, the term "piece" here means any type of structured information such as records, arrays, parts of database tables (e.g., columns, lines, or entries), or the like.

The pieces of original data may concern any type of information in a particular domain. For example, the original data may be in the domain of computer-based electronic circuit simulations (such as circuit simulations) and contain information on input values for the computer-based electronic circuit simulations, parameters of a model used by the computer-based electronic circuit simulations, intermediate and/or final simulation results, and the like. Such data related to computer-based electronic circuit simulation is kept in the at least one database 120 and may be queried by a computing system on which the computer-based electronic circuit simulation is carried out, e.g., via the at least one search platform 110, to retrieve input values or parameters, write or update the simulation results.

Further, in the database system 100, the at least one search platform 110 maintains pre-computed or pre-collected search results to decrease response times to answer search queries as compared to times required to retrieve the corresponding original data from the at least one database 120 and performing computation thereon to obtain the search results. In this regard, the terms "pre-computed" and "pre-collected" are used to cover any sort of pre-computation and pre-collection such as Internet crawlers collecting or copying the content of Internet web servers, but also complex and time-intensive computations of search results based on underlying original data. In the domain of computer-based electronic circuit simulations, pre-computation may involve performing simulations with a reduced set of parameters (compared to with all parameters of the real-world system), but with varying values of the set of parameters to obtain results to be used as input values in the further simulations with additional or other sets of parameters.

In the at least one search platform 110, at least one cache source 115 for storing the search results may be provided. The data stored in the at least one cache source 115 is referred to as cached data and a plurality of pieces of cached data may be stored in the at least one cache source 115. For example, the pieces of cached data stored in the at least one cache source 115 may correspond to pieces of original data in the at least one database 120 (i.e., the original data source) and the plurality of the pieces of cached data in the at least one cache source 115 concerns a subset of the plurality of pieces of original data from the at least one database 120.

However, as already mentioned above, caching pre-computed or pre-collected search results maintained in the at least one cache source 115 of the at least one search platform 110 become outdated over time due to changes in the original data from which they have been pre-computed or pre-collected. Due to changes in the original data, differences between the corresponding cached data and original data occur and thus the cached data become invalid.

To provide an indication of the likelihood of whether the cached data is valid or not (e.g., in the form of a probability), the pre-collected or pre-computed search results maintained in the at least one cache source 115 by the search platform 110 are associated with values indicating a corresponding probability (the values are also referred to as accuracy values or confidence factors). The values may be similar to the confidence factors as described by EP 2 908 255 A1. For example, each pre-collected or pre-computed search result stored by the search platform 110 has a corresponding value. Alternatively, one value may be associated with a plurality of pre-collected or pre-computed search results. The value indicates a probability of the associated pre-collected or pre-computed search result(s) being valid. That is, the value indicates a probability that a piece of the cached data stored in the at least one cache source 115 coincides with a corresponding piece of original data, i.e., a piece of original data from which the piece of cached data has been derived. The value associated with the pre-collected or pre-computed search results are utilized to decide whether to return the pre-collected or pre-computed search results from the at least one cache source 115 or from the at least one database 120.

More specifically, the value is used by a decision-making process (referred to as polling decision). The polling decision indicates whether the piece of cached data is to be used as search result and returned or whether the corresponding piece of original data is to be polled (i.e., retrieved) from the original data source. The piece of original data retrieved from the original data source is then used as the search result and returned. The piece of original data retrieved from the original data source is also to update the piece of cached data in the at least one cache source 115.

The probabilistic model, from which the values of the pre-computed or pre-collected search results in the cache source 115 are generally derived, models the discrepancies between the cached (pre-computed or pre-collected) search results and search results (i.e., presumed or if they are retrieved) based on the original data in the at least one database 120. That is, the probabilistic model approximates the accuracy or inaccuracy of any cached search result. As an example, the probabilistic model models the probable validity of the cached search results over time.

Various types of probabilistic models may be employed. For example, the probabilistic model may be a conceptual model which has been generated by a structured modeling process known as scientific modeling. Modeling requires identifying and selecting those aspects and events of the real-world environment (e.g., the aspects and events having influence on the volatility and accuracy decreasing over time of the cached search results) and leaving aside other aspects which may be of no specific relevancy for the purpose of the model. Furthermore, the identified and selected aspects may be abstracted and formulated/implemented in processible form such as a computer program and/or mathematical equations. Such a conceptual model may also serve as a means for computer-based simulation simulating the behavior (i.e., the volatility/accuracy) of the pre-computed or pre-collected search results over time. Alternatively, the employed probabilistic model may be a historic-statistical model which is based on monitoring and evaluating, e.g., the volatility/accuracy of the pre-computed or pre-collected search results in the given period in the past (e.g., three months) and extrapolates the determined trends into the future.

In addition to modeling the accuracy using the probabilistic model, a severe drop of accuracy is prevented by being reactive to events. Re-computation/re-collection decisions are refined on reception of pre-determined events which might have an impact on the correctness of the cached search results. The events may be asynchronous, i.e., the point of time of their occurrence is not predetermined - they can occur anytime, or synchronous, i.e., the point of time of their occurrence can be determined in advance - they may occur on a regular basis.

In FIG. 1, at least one client 130 (typically a plurality of clients) is connected to the at least one search platform 110 through a network such as a Local Area Network (LAN), Metropolitan Area Network (MAN), Wide Area Network (WAN) such as the Internet, or a mobile communication network such as Long-Term Evolution (LTE). The connection may be wired or wireless. For example, the clients 130 may be personal computers or mobile communication devices such as smartphones, tablets, personal assistance, or the like.

In the following, it will be explained how the database system 100 shown in FIG. 1 handles queries.

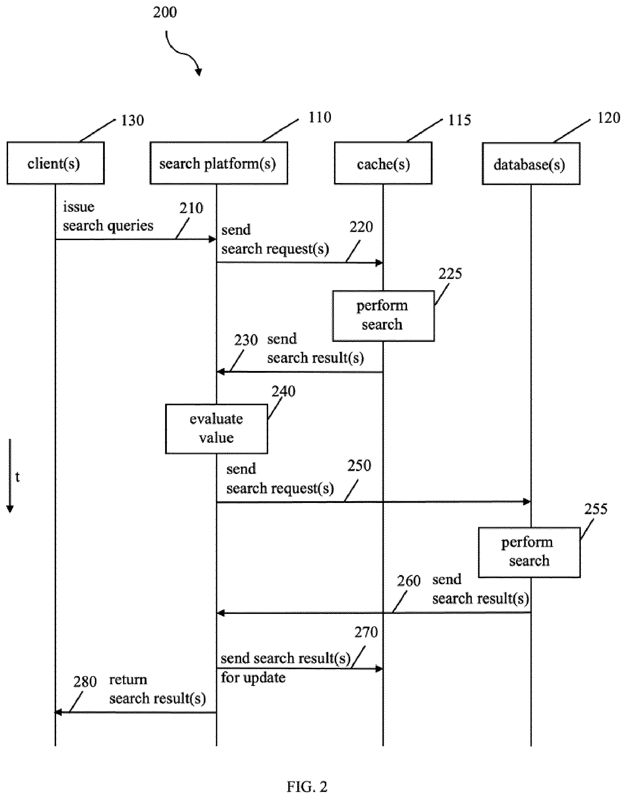

FIG. 2 illustrates a flow chart of a method 200 for handling search queries in the database system 100 of FIG. 1.

In operation 210, a client 130 of a plurality of clients directs a search query (i.e., one or more search queries) to the search platform 110 including one or more search criteria or parameters. For example, if a search query is an Internet search, the search query carries a search string, search text or search phrase as search criteria. A further search criterion may be the language of websites to be searched or an indication of a point of time of the first availability of the search string, search text or search phrase. In the above example, in the domain of computer-based simulations, the search query may carry, as search criteria, the name of an input parameter for which a value is needed by the computer-based simulation.

The search platform 110 receives the search query, processes the search query received from the client 130 and performs a corresponding search within the pre-collected or pre-computed search results. In more detail, in operation 220, the search platform 110 sends a search request to perform a search for the search query to the cache source 115. The search request includes at least part of the one or more search criteria or parameters of the search query. The cache source 115 performs the search based on the search request, i.e., search for data among the cached data matching with the search criteria or parameters of the search query, in operation 225, and sends found cached data as pre-computed or pre-collected search results (i.e., at least one search result) to the search platform 110 in operation 230. The pre-computed or pre-collected search results (i.e., cached data) have one or more values or parameters which coincide with (i.e., match) at least one of the search criteria or parameters of the search query.

Any or at least a given number of matching pre-computed or pre-collected search result in the cache source 115 is returned by the search platform 110 to the client 130 from which the search query was received as response to the search query in operation 280. The client 130 receives this response and presents the search results to the user, or, in the domain of computer-based simulations, uses the same as inputs for the simulation carried out thereon.

In case matching pre-computed or pre-collected search results are not found in the cache source 115, the search platform 110 may make the search criteria or parameters of the search query less restrictive and performs a revised search by sending a revised search query with the less restrictive search criteria or parameters to the cache source 115. The search platform 110 may also perform the revised search by not applying all given search criteria or parameters. The particulars of which and how the search criteria or parameters of search queries are made less restrictive, and/or which search criteria or parameter are less important in search queries, may be set in the search platform 110 by given rules or determined using machine learning techniques, e.g., probabilistic models based on historical search criteria or parameters and pre-computed or pre-collected search results.

As described above, the search results in the cache source 115 are associated with values. In operation 240, the search platform 110 evaluates the values of the pre-collected or pre-computed search results matching the search criteria or parameters before returning them to the clients 130. For example, the search platform 110 compares the values with a threshold (given in the search query by the clients 130 or prescribed in the search platform 110). Thereby, the search platform 110 determines the probability of the search results being valid, that is, the probability that the search results sent by the cache source 115 coincides with the corresponding original data in the database 120 from which they have been pre-collected or pre-computed.

If the values are above the given threshold, the search platform 110 returns the search results associated therewith in operation 280. Otherwise, for search results sent by the cache source 115 with values not above the given threshold, the search platform 110 retrieves corresponding original data from the databases 120. That is, the search platform 110 sends the respective search requests to the databases 120 in operation 250, and the databases 120 search for original data that match the search criteria or parameters in the search requests, in operation 255. Then, in operation 260, the databases 120 return the original data found. In response to receiving the original data from the databases 120, the search platform 110 returns the received original data as search results to the client 130 in operation 280. The search platform 110 may also update the search results retrieved from the databases 120 in the cache source 115 by sending the same, in operation 270, to the cache source 115 for update. The cache source 115 updates the cached data by using the search results received from the search platform 110.

That is, pre-computed search results associated with values indicating a probability of the associated search result being valid, are maintained in the cache source 115. The values are not of a static nature such that polling will be performed each time the values associated with search results indicate a probable invalidity of the pre-computed search results in the cache source 115. This leads to unnecessary and thus inefficient polling insofar the search results retrieved from the database 120 by way of polling in fact still coincide with the pre-computed search results. That is, the pre-computed search results might still valid even if the associated values indicate a certain likelihood of their invalidity (i.e., the values are not above the given threshold). In addition, as already mentioned above, re-computation and re-collection of the search results is a task consuming a substantial amount of computation resources as well as bandwidth resources. Thus, cached data are not to be updated in a synchronous manner, but original data are to be retrieved from the databases 120 only for pieces of cached data that are likely outdated.

Herein, retrieving original data from the database 120 and using the same to update cached data in the cache source 115 or to respond to search queries is also referred to as polling or polling operation. The polling may be performed in response to receiving a particular search query, i.e., in a synchronous manner, or independent of any search query. In the latter case, at least a part of, or the whole, cached data stored in the cache source 115 is updated by way of a batch operation, in an asynchronous manner. The decision whether to poll or not is referred to as polling decision. For example, evaluating the value associated with the cached data against a given threshold, as in operation 240 of FIG. 2, to determine whether the cached data is likely valid or not and thus whether it is necessary to retrieve original data from the database, is a polling decision in the context of the subject disclosure.

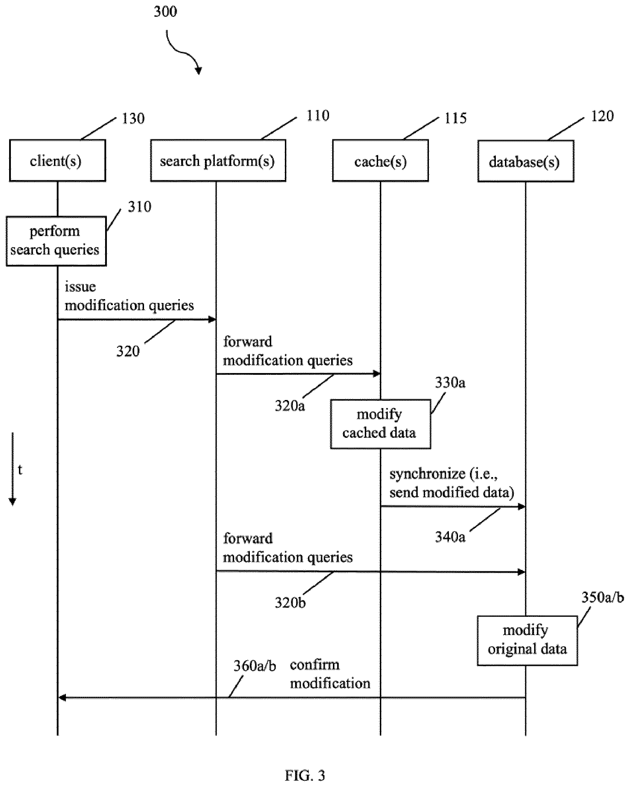

FIG. 3 illustrates a flow chart of a method 300 for handling modification queries in the database system 100 of FIG. 1.

In operation 310, the client 130 of the plurality of clients performs search queries to the search platform 110 and receives search results from the search platform 110. The search queries are handled in accordance with the flow chart of the method 200 shown in FIG. 2.

In response to receiving search results for a search query issued by the client 130, the client 130 may decide to modify data of the search results. That is, the original data stored in the database 120, which correspond to the returned search results, are to be modified. In the above-described domain of computer-based simulations, the search results used as inputs for the simulation carried out may, as a result of the simulation, required to be changed. For example, the simulation may result in a requirement to adapt or vary the inputs for the simulation, e.g., in order to cope with errors in the simulation or to perform the simulation on variations of the inputs.

In order to modify data, the client 130 (or the plurality of clients) issue(s) a modification query (i.e., one or more modification queries) including modified data. The modification query is preceded by one or more search queries and related or associated to the search results the clients 130 received from the search platform 110 in response to these search queries. For example, each search result may include identification information uniquely identifying the search result from among the search queries. The identification information may also identify the search query for which the client 130 received the search result. The identification information may be included in the modification query to modify data of the search result. In other examples, the modification query may relate to the search query by including the one or more search criteria or parameter, which were included in the search query. In the above example of computer-based simulations, the modification query may carry the name of the input parameter the value of which was needed by the computer-based simulation.

Similar to search queries, the client 130 directs the modification query to the search platform 110. In other examples, the client 130 may direct the modification query to the cache source 115 (or cache sources) or the database 120 (or databases). In such examples, the client 130 acquires information about the cache source 115 or the database 120 to which the modification query is to be directed before sending the modification query.

The search platform 110 receiving the modification query processes the modification query e.g. to determine whether to forward the modification query to a cache source 115 or a database 120. The search platform 110 further determines the cache source 115 or the database 120 to which the modification query is to be forwarded and forwards the modification query to the determined cache source 115 (operation 320a shown in Fig. 3) or the determined database 120 (operation 320b shown in Fig. 3).

For example, the search platform 110 determines, based on the identification information included in the modification query, the cache source 115 from which the search result to be modified was received. That is, the cache source 115 storing the cached data which formed basis for the search result is determined by the search platform 110. The search platform 110 may also determine the cache source 115 based on history information on search queries, search results to search queries and/or the clients from which the search queries were received and to which the search results were returned. The history information may be maintained within the database system 100. For example, the history information may be recorded by the search platform 110 and stored at the search platform 110 or a history storage such as a logging/reporting platform of the database system 100 (not shown in FIG. 3).

For example, the search platform 115 determines, based on the identification information included in the modification query, the database 120 which stores the original data to be modified based on the modified data included in the modification query. That is, the database 120 storing the original data which formed basis for the search result to be modified is determined by the search platform 110. The search platform 110 may also determine the database 120 based on history information on search queries, search results to search queries, the client(s) from which the search queries were received and to which the search results were returned, and/or the cache(s) which were involved in handling search queries. The history information may be maintained within the database system 100. For example, the history information may be recorded by the search platform 110 and stored at the search platform 110 or a history storage such as a logging/reporting platform of the database system 100 (not shown in FIG. 3). The search platform 110 may also query the cache source(s) 115 for information with regard to the database 120 which stores the original data.

In some examples, in response to determining that the modification query is to be forwarded to the cache source 115 but before forwarding the modification query, the search platform 110 may evaluate whether the cached data stored in the cache source 115 and to be modified by the modification query is valid. For example, the search platform 110 may compare the value associated with the cached data to be modified with the given threshold, similar to operation 240 as described above with reference to Fig. 2. That is, the search platform 110 determines the probability of the cached data to be modified being valid (i.e., the probability that the cached data to be modified still coincides with the corresponding original data in the database 120). If the value is above the given threshold (i.e., the cached data is valid), the search platform 110 forwards the modification query to the determined cache source 115 (operation 320a). Otherwise (i.e., the value is not above the given threshold and thus invalid), the search platform 110 does not forward the modification query to the cache source 115 but to the database 120 (operation 320b) that stores the original data corresponding to the cached data.

In response to receiving the modification query from the search platform 110 in operation 320a, the cache source 115 processes the modification query and modifies the cached data based on the modified data included in the modification query. The cached data to be modified is determined by the cache source 115 based on the modified data or additional information included in the modification query. Processing the modification query at the cache source 115 may include determining whether the cached data to be modified have been changed (e.g., due to other modification queries or determination of invalidity based on the comparison of the value and the threshold) after being used as the basis for the search result. If so, the cache source 115 forwards the modification query to the database 120, which stores the original data corresponding to the cached data to be modified, for further processing. That is, the cache source 115 determines the database 120 from which the cached data were received. The cache source 115 may also invalidate the cached data. Otherwise, if the cache source 115 determines that the cached data can be changed, the cache source 115 modifies the cached data using the modified data in operation 330a. In response, or in parallel, the cache source 115 synchronizes the modified cached data with the database 120 which stores the original data, e.g., by sending the modified data included in the modification query or the modified cached data to the database 120.

The database 120 processes the modified data or the modified cached data received from the cache source 115 and modifies the original data based thereon in operation 350a. The processing of the modified data or modified cache data may include determining whether the original data can be modified or has already been modified and is therefore not to be modified. The database 120 confirms the modification of the original data in operation 360a. The confirmation may be sent to the cache source 115 by which the confirmation is forwarded to the client 130 (e.g., via the search platform 110) or to the client 130 directly. If the original data cannot be modified, the database 120 sends a corresponding information indicating that original data could not be modified towards the client 130. The information may also indicate a reason for not modifying the original data.

In response to receiving the modification query from the search platform 110 in operation 320b, the database 120 processes the modified data included in the modification query and modifies the original data based thereon in operation 350b. The processing of the modified data may include determining whether the original data can be modified or has already been modified and can therefore not be modified on the sole basis of the modification query. The database 120 confirms the modification of the original data in operation 360b. The confirmation may be sent to the search platform 110 by which the confirmation is forwarded to the client 130 or to the client 130 directly. If the original data is not to be modified e.g. due to an intermediate other modification occurred after returning 280 or due to an actual invalidity of the cached search result(s) returned to the client 130, in response to the search query, the database 120 sends a corresponding information indicating that original data could not be modified towards the client 130. The information may also indicate a reason for not modifying the original data.

Responsive to modifying the original data, the database 120 may signal to the cache source(s) 115 which stored cached data corresponding to the original data that the cached data have become invalid due to the modification of the original data. The signaling by the database 120 may also include the modified original data to be used by the cache source(s) 115 (i.e., with which the cached data is to be replaced).

As already discussed in conjunction with FIG. 2, the cached data in the cache source(s) 115 are updated by retrieving (i.e., polling) corresponding original data from the database(s) 120, either synchronously or asynchronously, in accordance with the polling decision. The polling decision may however be inefficient which is the case if one or more search queries for which original data were retrieved from the database(s) 120 due to determined invalidity of the cached data are not followed by a modification query related to or associated with the one or more search queries. On the other hand, the modification query related to or associated with one or more preceding corresponding search queries may relate to cached data (i.e., search results) provided by the cache source(s) 115 in response to the search queries which may already be invalid at the time of providing the search results. This may cause the modification of the original data to be prevented for data consistency reasons, resulting in a requirement to perform the corresponding search queries and the modification query again and causing additional load within the database system 100. Also, polling original data in response to search queries which are not followed by modification queries causes unnecessary load within the database system 100.

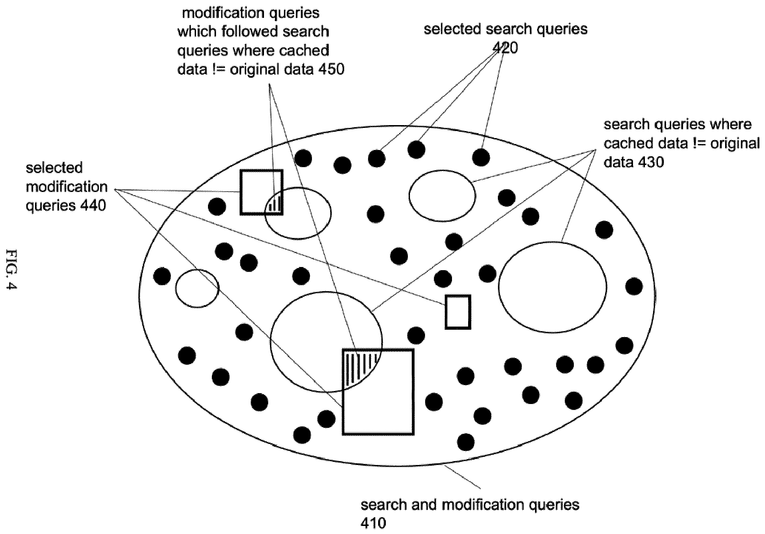

The subject disclosure takes account of this issue and provides a method of adapting the polling decision in order to increase the efficiency thereof by decreasing the polling of original data with respect to which receiving modification queries is not likely. In more detail, the subject disclosure allows to avoid unnecessary and inefficient polling or at least limit their amount by way of adapting the values and thus the decision to poll, thereby making them more dynamic. This allows to limit the number of search requests or search queries to be performed against the database(s) 120. The general principles of the subject disclosure will now be described with reference to FIG. 4.

In general, the method of adapting the polling decision according to the subject disclosure selects a number of search queries (search requests) 420 from among a plurality of search and modification queries 410 handled by a database system such as the database system 100 shown in FIG. 1. For example, at the time a search query is received from a client 130, it is decided whether to process the search query in the known manner as described above with reference to FIG. 2, or to select the search query and handle the same as a selected search query 420. Selected search queries form actual queries which are used to adapt the probabilistic model and are processed in a particular way. The decision to select a search query may be random, or based on certain prescribed factors such as, for example, search query-specific factors (e.g., the search query includes prescribed search criteria or parameter), client-specific factors (e.g., the search query is received from prescribed clients), or other factors (e.g., the search query is received at prescribed times or time intervals). The selected search query 420 is processed by retrieving the cached data from the cache source 115 and also retrieving the original data from the database 120, both matching the search criteria or parameters of the selected search query 420. The original data retrieved from the database 120 is returned to the client 130 and may also be used to update the cached data in the cache source 115. The retrieved cached data and the retrieved original data are used to adapt the probabilistic model. In particular, the retrieved cached data and the retrieved original data are compared to determine whether retrieving the original data (polling) would have been appropriate or not. That is, if the comparison results in that the retrieved cached data coincides with the retrieved original data, retrieving the original data would have been inefficient as the cached data was still valid. Otherwise, if the retrieved cached data does not coincide with the retrieved original data for the search query 430, the cached data were invalid and polling was sensible. This result indicating the efficiency of polling is stored together with the retrieved cached data and the retrieved original data and used to adapt the probabilistic model from which the value associated with the cached data is derived. The adaptation is preferably made by using a machine learning algorithm as will be described in more detail below. Accordingly, the probabilistic model is improved with respect to whether the polling decision (i.e., retrieving the original data from the database and updating the cached data) is efficient, thereby increasing the precision of the probability model.

In addition, the method of adapting the polling decision according to the subject disclosure selects a number of modification queries (modification requests) 440 from among the plurality of search and modification queries 410 handled by the database system such as the database system 100. For example, at the time a modification query is received from a client 130, it is decided whether to process the modification query in the known manner as described above with reference to FIG. 3, or to select the modification query and handle the same also as a selected modification query 440. Selected modification queries are used to adapt the probabilistic model and further processed in a particular way. The decision to select a modification query may be random, or based on certain prescribed factors as described with respect to the search queries above. The selected modification query 440 is processed by determining whether the selected modification query 440 is related or associated with a selected search query (i.e., at least one selected search query) among the selected search queries 420. If so, it is further determined whether it was determined for the selected search query that the retrieved cached data does not coincide with the retrieved original data 430. That is, if the determination results in that the modification query is related to or associated with a selected search query for which it was determined that the cached data does not coincide the original data, the polling decision was not only efficient with respect to updating the cached data but also with respect to that the search query was made as a requirement to perform a modification query 450 (i.e., the search query resulted in the modification query, or the search query is followed by a corresponding modification query); otherwise, it would have been sensible to poll the original data but not efficient as the search query was not followed by a modification query. The result indicating the efficiency of polling with respect to whether a modification query followed the search query is used to adapt the probabilistic model from which the value associated with the cached data is derived. The adaptation is preferably made by using the machine learning algorithm. Accordingly, the probabilistic model is improved with respect to whether a modification query followed the search query, thereby increasing the precision of the probability model with respect to modification queries.

According to principles, the number of search queries among all the search and modification queries handled by the database system is selected for use to adapt the polling decision and thus handled differently than the search queries not selected. The selected search queries are handled as described hereinbefore, while non-selected search queries are handled as described above with reference to FIG. 2. Similarly, the number of modification queries among all the search and modification queries handled by the database system is selected for use to adapt the polling decision as described hereinbefore while modification queries not selected are processed as described above with reference to FIG. 3.

This allows to determine whether polling would have been appropriate and thus efficient for cached data and corresponding original data as it can be determined whether the cached data have actually already become outdated or not. This also allows to determine whether the polling would have been appropriate and thus efficient for the search queries as it can be determined whether updating the cached data was reasonable as the search queries which resulted in the updates were actually followed by a modification query for which cached data corresponding to the original data are necessary. This is done in an online manner based on real search and modification queries such that additional offline processing using, for example, test search and modification queries or historical search and modification queries can be avoided, while increasing the precision of the probability model.

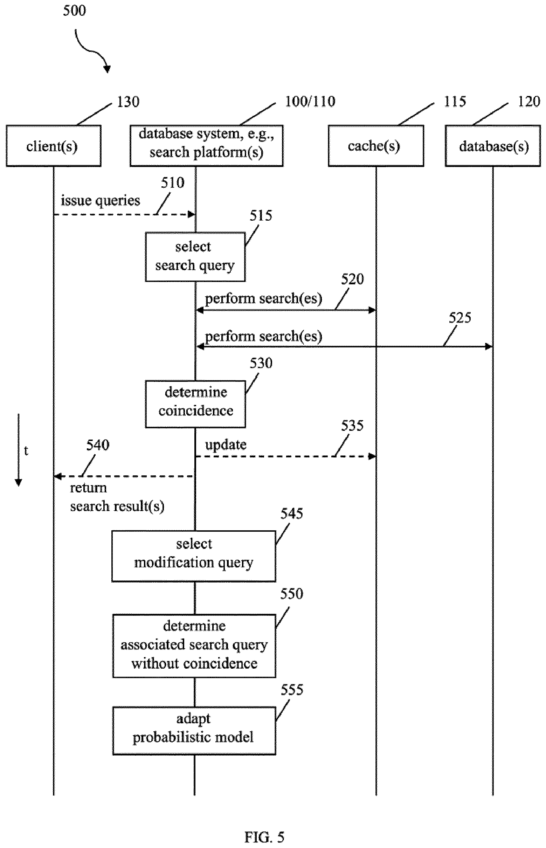

Now, the method of adapting the polling decision, as an aspect of the subject disclosure, will be described in more detail with reference to FIG. 5.

The method 500 is performed in a database system such as the database system 100 shown in FIG. 1. The database system comprises an original data source and a cache source. Examples of the original data source include the one or more database(s) 120 as shown in Fig. 1. Examples of the cache source include the one or more cache(s) 115 as shown in FIG. 1, which may be included in, or coupled to, the search platform(s) 110. The original data source stores a plurality of pieces of original data, and the cache source stores a plurality of pieces of cached data. Herein, it should be understood that the pieces of the cached data are retrieved from the original data source and stored in the cache source by a polling operation, and thus represent cached versions of pieces of original data. The cached data are however not limited to cached versions and may concern results of pre-computation or pre-collection processing based on the original data. The polling operation should be understood as to comprise the pre-computation or pre-collection processing. The cached data are associated with a value (e.g., an accuracy value as described above) indicating a probability that the cached data coincides with the original data. For example, each piece of the cached data may be associated with such a value which indicates the probability that said piece of the cached data coincides with the corresponding piece of the original data, i.e., the piece of the original data from which it was derived. The value is derived from a probabilistic model established in the database system. The database system maintains and adapts the probabilistic model as well as derives the values from the probabilistic model.

In the database system, the polling operation is performed in accordance with the polling decision. The polling decision indicates whether the piece of cached data coincides with the original data (at least with a certain probability) and can be used to respond to search queries or whether the corresponding piece of original data needs to be polled from the original data source and used to respond to search queries. The polling decision is based on the value associated with the piece of cached data. The value may be compared to a threshold. If the value is below the threshold, which indicates that the piece of cached data does probably not coincide with the original data (i.e., the piece of cached data is invalid), the corresponding piece of original data is to be polled from the original data source. Otherwise, the piece of cached data probably still coincides with the original data and can therefore be used (i.e., the piece of cached data is valid).

The method 500 starts in operation 510 with processing a plurality of queries. The plurality of queries is received, at the database system 100 or more specifically by the search platform 110 of the database system 100, from the client such as the client 130 shown in FIG. 1 (or a plurality of clients) connected to the database system 100. The received queries are handled by the search platform 110.

The queries handled and processed by the database system 100 comprises search queries and modification queries. The search queries are used to search for pieces of data in accordance with the polling decision. The search queries may be processed by the database system 100 in accordance with the method 200 shown in FIG. 2. The modification queries are used to modify pieces of the original data in the original data source. The modification queries may be processed by the database system 100 in accordance with the method 300 shown in FIG. 3. Typically, the modification queries are related to or associated with one or more preceding search queries. Said differently, search queries may result in modification queries e.g. to modify search results presented and thus, modification queries may follow preceding search queries.

In operation 515, search queries are selected from among the plurality of search queries issued 510 by client(s) 130 and handled by the database system 100. For example, the database system 100 may decide, at the time of receiving a search query from the client 130, whether the search query is to be handled as a selected search query or not. This is done on a random basis, but may also be done on a regular basis or in accordance with given rules in other embodiments. For example, the regular basis may include to handle each tenth or hundredth search query as a selected search query. The given rules may define search criteria or parameters which if present in a search query designate the search query as to be selected, or other factors for designation as to be selected such as time of receipt, given number of search queries with similar or identical search criteria or parameters, given number of search queries received from the same client, or statistical models. The search query is handled as selected search query if designated by the given rules.

In operation 520, in response to the search query having been selected, a piece of cached data (also referred to as first piece of cached data) matching the search query is retrieved from the cache source 115. More specifically, the cache source 115 is provided with a search query including at least part of the search criteria or parameters included in the search query. The cache source 115 searches for cached data among all the cached data stored therein, which match with the search query, particularly the search criteria or parameters thereof. The cached data matching the search query is returned, as the first piece of cached data, from the cache source. An example for retrieving the piece of cached data from the cache source has been described with reference to operations 220, 225, and 230 of FIG. 2. If no cached data matching the search query is found, the method 500 may proceed further with cached data indicating no match.

Further, in operation 525, a piece of original data (also referred to as first piece of original data) matching the search query is retrieved from the original data source 120. More specifically, the original data source 120 is provided with a search query including at least part of the search criteria or parameters included in the search query. The search query sent to the original data source 120 corresponds in view of the search criteria or parameters included to the search query sent to the cache source 115. The original data source 120 searches for original data matching the search query, particularly the search criteria or parameters thereof. The original data matching the search query is returned, as the first piece of original data, from the original data source 120. An example for retrieving the piece of original data from the original data source has been described with reference to operations 250, 255, and 260 of FIG. 2. If no original data matching the search query is found, the method 500 may proceed further with original data indicating no match.

The first piece of cached data from the cache source 115 and the first piece of original data from the original data source 120 are retrieved for each search query among the search queries selected. In some examples, the first piece of cached data from the cache source 115 and the first piece of original data from the original data source 120 may be retrieved in operations 520, 525 in parallel, or in any order.

In some examples, if no cached data in the cache source 115 matching the search query is found in operation 520, the search criteria or parameters of the search query may be made less restrictive, as described above with reference to FIG. 2 and the search for cached data may then be performed using the search query with the less restrictive search criteria or parameter. Likewise, if no original data in the original data source 120 matching the search query is found in operation 540, either a corresponding information indicating that no original data matching the search query is present in the original data source 120 or cached data found in operation 520 is returned to the client 120 in operation 540.

In operation 530, a determination is made as to whether the first piece of cached data retrieved from the cache source 115 in operation 520 coincides with the first piece of original data retrieved from the original data source 120 in operation 525. For example, the piece of cached data may be compared to the piece of data. If the first piece of cached data corresponds to the first piece of original data, the determination indicates coincidence. In other examples, it may be determined whether the first piece of cached data corresponds to the first piece of original data at least with respect to a certain extent, such as a given margin in case the first piece of cached data concerns a number. Otherwise, if the first piece of cached data does not correspond to the first piece of original data, the determination indicates non-coincidence.

The determination of coincidence in operation 530 indicates that retrieving the first piece of original data from the original data source 120 would not have been necessary because the first piece of cached data was still valid. On the other hand, the determination of non-coincidence in operation 530 indicates that retrieving the first piece of original data from the original data source 120 would have been necessary because the first piece of cached data was invalid.

In some examples, each search query among the selected search queries for which the determination indicates non-coincidence of the first piece of cached data with the first piece of the original data may be stored within the database system. A data structure such as a list or a database for storing the search query or information about the search query (e.g., the identification information as described above) may be maintained within the database system 100 (e.g., at the search platform(s) 110). In the data structure, additional information such as the first piece of cached data, the first piece of original data, timing information, or the like may be stored. In other examples, the search query among the selected search queries for which the determination indicates non-coincidence may be marked.

The method 500 may also include updating the first piece of cached data in the cache source 115 using the first piece of original data retrieved from the original data source 120, in operation 535. An example for updating the first piece of cached data in the cache source 115 has been described with reference to operation 270 of FIG. 2.

The first piece of original data retrieved from the original data source 120 is returned to the client 130 as the search result in operation 540. Here, in case the search criteria or parameters of the search query have been made less restrictive as described above, returning the first piece of original data includes an indication that and how the search criteria or parameters of the search query have been changed so that they are less restrictive.

In operation 545, modification queries are selected from among the plurality of modification queries issued 510 by client(s) 130 and handled by the database system 100. For example, the database system 100 may decide, at the time of receiving a modification query from the client 130, whether the modification query is to be handled as a selected modification query or not. This is done on a random basis, but may also be done on a regular basis or in accordance with given rules in other embodiments. For example, the regular basis may include to handle each tenth or hundredth modification query as a selected modification query. The given rules may define criteria or parameters which if present in a modification query designate the modification query as to be selected, or other factors for designation as to be selected such as time of receipt, time elapsed from the reception of the search query with which the modification query is associated, a given number of modification queries, or statistical models. The modification query is handled as selected modification query if designated by the given rules.

In operation 550, in response to the modification query having been selected, it is determined whether the selected modification query is associated with a search query from among the search queries selected in operation 515 for which it was determined in operation 530 that the first piece of cached data does not coincide with the first piece of original data. For example, in operation 550, the database system 100 may determine whether e.g. in the data structure, a search query or information about a search query associated with the selected modification query is stored. The database system 100 may, for example, use identification information included in the modification query to search for corresponding identification information of a search query in the data structure. If a search query is determined in operation 550, the search query may be marked as being associated with the selected modification query. For example, the modification query or information about the modification query may also be stored in the data structure. That is, the search query or the information about the search query is indicated in the data structure as being associated with the selected modification query.

Examples for determining whether selected modification query is associated with a search query from among the search queries include one or more of: determining that the selected modification query and the search query are received from the same client 130, determining that the selected modification query is received within a given time period from the search query, determining whether the selected modification query comprises information associated with one or more search terms, one or more search criteria or parameters of the search query, and determining whether the modification query comprises information identifying the search query (e.g., the identification information).

The determination that the modification query is associated with a selected search query for which it was determined that the first piece of cached data does not coincide with the first piece of original data (i.e., determination of non-coincidence in operation 530) indicates that retrieving the first piece of original data from the original data source 120 would have been appropriate to return a valid search result in operation 540, and also efficient as the search query resulted in the modification query.

Finally, in operation 555, the probabilistic model is adapted based on the results of the determinations with respect to the selected modification queries. For each modification query randomly selected in operation 545, the adaptation of the probabilistic model may be performed. In general, the adaptation of the probabilistic model is not individually performed for each selected modification query, but in an asynchronous manner for a number of modification queries selected in operation 545. For example, asynchronously performing means performing the adaptation when a given number of modification queries have been selected (e.g., randomly) and processed.

For example, if it is determined in operation 550 that the selected modification query is associated with a selected search query for which non-coincidence was determined in operation 530, but the search query was responded from the cache(s) 115, the probabilistic model may be adapted such that the polling decision indicates that the piece of original data matching the search query is to be polled from the original data source 120. As a consequence, this adaptation of the probabilistic model causes corresponding (future) search queries which are probably followed by modification queries to be responded not from the cache(s) 115 but by polling original data from the original data source 120 and returning the original data, preventing responding with cached data which are already invalid at the time of response to the search queries or which have a probability of become invalid after responding to the search query but before issuing the associated modification query.

Otherwise, if it is determined that the selected modification query is associated with a search query for which coincidence was determined, but the value indicating the probable validity of the search results was below the threshold, the probabilistic model may be adapted such that the polling decision indicates that the piece of cached data matching the search query is to be used. As a consequence, this adaptation of the probabilistic model causes corresponding (future) search queries which are probably followed by modification queries to be responded from the cache(s) 115, preventing polling from the original data source 120.

In some examples, the probabilistic model may be adapted with respect to search queries which resulted in modification queries so that, for such search queries, the probability is increased such that the pieces of data to be returned as search result to the client 130 is a piece of original data retrieved from the original data source 120. Thus, the probability that corresponding (future) search queries will be responded by using the piece of original data from the original data source 120 is increased (i.e., the piece of cached data will less probably be used), reducing the load involved in repeating the search queries or modification queries due to invalid search results returned to client 130. Also, the probability value may be decreased with respect to search queries which resulted in no modification query and for which it would be acceptable to return the (probably invalid) piece of cached data as search result to the client 130. Thus, the probability that corresponding (future) search queries probably not followed by modification queries will be responded by using the piece of original data from the original data source 120 is decreased (i.e., the piece of cached data will more probably be used), reducing the load caused by polling the original data source 120.

In some examples, the probabilistic model may also be adapted using selected search queries for which coincidence is determined in operation 530, but for which no associated modification query is determined in operation 550. For such selected search queries, the probabilistic model is adapted such that the polling decision indicates that the piece of cached data is to be used because whether or not valid search results are returned to the client 130 is less critical in the event of absence of any subsequent modification query (e.g., the probability is increased such that the piece of data to be returned to the client 130 is the piece of cached data).

The adaptation of the probabilistic model in operation 555 may use a machine learning algorithm, as will be described herein below.

For example, adapting the probabilistic model in operation 555 may include to increase weights for search queries for which the determination in operation 530 resulted in non-coincidence and which are determined to be associated with modification queries in operation 550. In order to keep balance within the probabilistic model and thus avoid to weight only search queries which result in modification queries, weights for search queries not associated with modification queries but for which the determination in operation 530 resulted in coincidence are adapted (e.g., increased).

In response to the adaptation of the probabilistic model, the values of all or at least some pieces of cached data in the cache source 115 may be updated. For example, the values of the cached data may be updated by deriving them from the adapted probabilistic model.

In the subject disclosure, any machine learning algorithm which can be used in connection with probabilistic models may be established. For example, the machine learning algorithm, given a plurality of selected search queries converted into a set of structured features, builds a probabilistic model to predict a target (e.g., first indicator value stored with the search queries). The term "feature" here concerns any information that can be deduced from the search queries. The conversion of the plurality of selected search queries may comprise computing values of all features, using the search criteria and/or reference data (e.g., tables showing default output values for the given electronic circuit, etc.). For example, from all search criteria of the plurality of search queries and the reference data, the set of features to be used by the machine-learning algorithm may be selected. The set of features may therefore contain a mixture of search criteria and features requiring computations, but a feature may also correspond to one or more search criteria (e.g., all input parameter for a given electronic circuit to be simulated by the computer-based electronic circuit simulations, timestamp of the search query, etc.). The set of features are structured as the machine-learning algorithm requires input of e.g. a structured data file (e.g., comma separated data file), with one row by search query and one column by feature. The order of the columns follows a given pattern in order for the probabilistic model to be used correctly once deployed. In some non-limiting examples, the machine learning algorithm may iteratively build a decision tree. Starting from the plurality of the selected search queries, the machine learning algorithm tests features and conditions on these features to split the plurality in two child sets. One of these tests may be "is the input parameter for the given electronic circuit equal to a voltage having a value of 10" (i.e., in general, check whether the feature equals a given value), or "is the input parameter for the given electronic circuit equal to a voltage having a value greater than 20" (i.e., in general, check whether the feature is greater/smaller than the given value). From all the features and conditions tested, the machine learning algorithm keeps only the feature and condition which separates the most the plurality into a first child set containing search queries with their target equal to one value, and a second child set containing the search queries with their target not equal to the one value. In other words, the decision tree is built by the machine learning algorithm such that a feature is taken as a node with two outgoing paths, one for search queries having the feature which equals the given value (the first child set) and another path for search queries having the feature which does not equal the given value (the second child set). That is, the search queries are divided into two child sets based on the feature. The machine learning algorithm progressively builds the decision tree, by then also splitting the child sets in smaller sets with the same feature and condition selection logic. The machine learning algorithm stops once the decision tree reaches a given size or complexity provided in parameter thereof.

As described above, FIG. 5 shows operations which are performed for each search query selected in operation 515 from among the plurality of search queries handled by the database system 100. Hereinbelow, the operations to be performed for each search query not being selected in operation 515 of FIG. 5 will be described.

In response to the search query not having been selected in operation 515 (i.e., for the search query not being randomly selected), a piece of cached data (also referred to as second piece of cached data) matching the search query is retrieved from the cache source 115. The second piece of cached data is retrieved as described above with reference to operations 220, 225, and 230 in FIG. 2. Specifically, the cache source 115 is provided with the search query as in operation 220 of FIG. 2 and is searched for pieces of cached data matching the search query, particularly the search criteria or parameters thereof, as in operation 225 of FIG. 2. The cached data matching the search query is returned, as the second piece of cached data, from the cache source 115 as in operation 230 of FIG. 2.

The second piece of cached data retrieved from the cache source 115 is associated with the value, as described above. In response to retrieving the second piece of cached data, the value of the second piece of cached data is evaluated. For example, the value is compared with the given threshold. This operation is similar to operation 240 shown in FIG. 2.

In some examples, the threshold is prescribed by the client 130. For example, the client 130 includes the threshold (such as "at least 85%" or "at least 0,9" or "high" being likewise defined as "at least 0,9") in the search query when requesting search results from the database system 100. The client 130 may also send dedicated asynchronous messages indicating a desired threshold to the database system 100. The database system 100 stores these client-specific threshold prescriptions and employs them each time a search query is received from the respective client 130. Alternatively, in other examples, the threshold is set by a third party such as the operator of the database system 100. In this case, a single threshold may be applicable for all search queries received from all clients 130. The clients 130 may not have an influence on the threshold employed by the database system 100. Alternatively, the threshold pre-set by the third party may act as a default value and clients 130 may be able to override this default value by an own client-specific prescription.

If the evaluation turns out that the value is below the given threshold, a piece of original data (also referred to as second piece of original data) matching the search query is retrieved from the original data source 120. The operation of retrieving the second piece of original data from the original data source 120 is similar to operations 250, 255, and 260 shown in FIG. 2. More specifically, the original data source 120 is provided with the search query, similar to operation 250 shown in FIG. 2, and is searched for original data matching the search query, particularly the search criteria or parameters thereof, similar to operation 255 shown in FIG. 2. The original data matching the search query is returned, as the second piece of original data, from the original data source 120, similar to operation 260 in FIG. 2.

In response to retrieving the second piece of original data, the second piece of cached data in the cache source 115 is updated by the second piece of original data retrieved from the original data source 120. The operation of updating is similar to operation 270 shown in FIG. 2. For example, the second piece of original data is stored in the cache source 115 such that the second piece of cached data is replaced, thereby forming a new piece of cached data in the cache source 115. Also, the second piece of original data may be stored in the cache source 115 as updated piece of cached data, which invalidated the previous piece of cached data. Control data related with the value of the updated piece of cached data such as an update timestamp may be updated as well. In an example, a garbage collector may be performed on the cache source 115, deleting any invalidated cached data and freeing the corresponding space in the cache source 115.

Depending on whether evaluating turned out that its value is above the given threshold or not, either the piece of cached data or the piece of original data is returned as search result to the client 130 in operation 750. The operation of returning may also be performed in parallel with operation of updating. Here, in case the search criteria or parameters of the search query have been made less restrictive as described above, returning the second piece of original data or the second piece of cached data includes an indication that and how the search criteria or parameters of the search query have been changed so that they are less restrictive.

Finally, the probabilistic model is adapted based on the pieces of the cached and original data retrieved from the cache source(s) 115 and the original data source 120 (e.g., the first pieces of cached and original data and/or the second pieces of cached and original data) using the machine learning algorithm as described above. The operation of adapting the probabilistic model is similar to the operation 555 as described above with reference to FIG. 5.

In some examples, the results (coincidence, non-coincidence) of the determinations performed in operation 530 with respect to the selected search queries may also be used in the adaptation of the probabilistic model in operation 555.

The method 500 of FIG. 5 may comprise the following additional operations, which may be performed following the operation 545 to select modification queries.

In response to the modification query having been selected, it is determined whether the selected modification query is associated with a search query from among the search queries selected in operation 515. This operation is similar to operation 550 described above with reference to FIG. 5, but differs therefrom in that the result of the determination (non-/coincidence with respect the first piece of cached data and the first piece of original data) is not taken into account.

For the search query (or for each search query) determined to be associated with selected modification query, a piece of cached data (also referred to as third piece of cached data) matching the search query is retrieved from the cache source 115. The operation of retrieving the third piece of cached data corresponds to operation 520 as described above with reference to FIG. 5.

Furthermore, for the search query (or for each search query) determined to be associated with selected modification query, a piece of original data (also referred to as third piece of original data) matching the search query is retrieved from the original data source 120. The operation of retrieving the third piece of original data corresponds to operation 525 as described above with reference to FIG. 5.

The, a determination is made as to whether the third piece of cached data retrieved from the cache source 115 coincides with the third piece of original data retrieved from the original data source 120. The operation of determining whether the third piece of cached data coincides with the third piece of original data corresponds to operation 530 as described above with reference to FIG. 5.

If the determination turns out that the third piece of cached data does not coincide with the third piece of original data, the probabilistic model is adapted using the machine learning algorithm. The operation of adapting the probabilistic model corresponds to operation 555 as described above with reference to FIG. 5, but is made with respect to the search queries for which the third pieces of cached and original data are retrieved. In some examples, the third pieces of cached and original data may be used to adapt the probabilistic model, as described above in view of the first/second pieces of cached and original data.

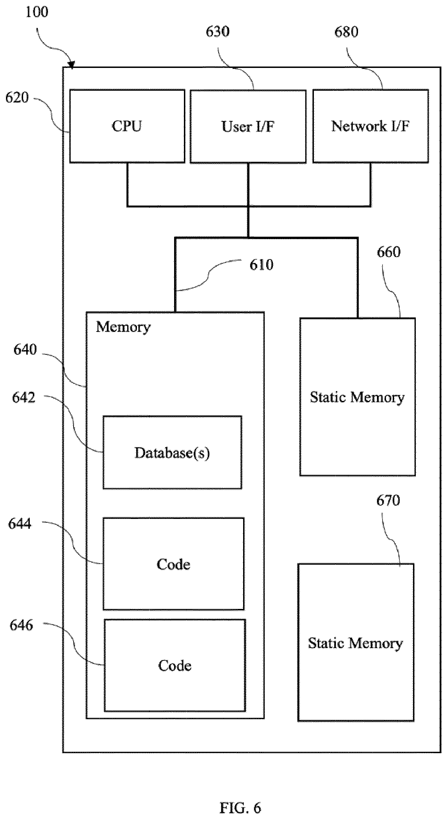

Finally, FIG. 6 is a diagrammatic representation of a computer system which provides the functionality of the database system 100 according to the subject disclosure. Within the database system 100 a set of instructions, to cause the computer system to perform any of the methodologies discussed herein, may be executed. The database system 100 includes at least one processor 620, a main memory 640 and a network interface device 680, which communicate with each other via a bus 610. Optionally, it may further include a static memory 660 and a disk-drive unit 670. A video display, an alpha-numeric input device and a cursor control device may be provided as examples of user interface 630. The network interface device 680 connects the computer system 600 at least to the clients 130, one or more databases acting as the original data source 120 and the history or logging database 630, if provided external to the database system 600, other computing devices, if provided external to the database system 100, the Internet and/or any other network. Also, the one or more databases acting as the original data source 120 and the history or logging database 630 may be provided as databases 642 within the main memory 640. A set of computer-executable instructions (i.e., computer program code) 644 embodying any one, or all, of the methodologies described above, resides completely, or at least partially, in or on a machine-readable medium, e.g., the main memory 640 and/or the at least one processor 620. A machine-readable medium on which the code 644 resides may also be a non-volatile data carrier (e.g., a non-removable magnetic hard disk or an optical or magnetic removable disk) which is part of disk drive unit 670. The code 644 may further be transmitted or received as a propagated signal via the Internet through the network interface device 680. Basic operation of the database system 100 including user interface and network communication is controlled by operating system 646.

In general, the routines executed to implement the embodiments of the invention, whether implemented as part of an operating system or a specific application, component, program, object, module, or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flow charts, sequence diagrams, and/or block diagrams. The computer program instructions may be provided to one or more processors of a general-purpose computer, a special purpose computer, or other programmable data processing apparatus to produce a machine, such that the instructions, which execute via the one or more processors, cause a series of computations to be performed to implement the functions, acts, and/or operations specified in the flow charts, sequence diagrams, and/or block diagrams.

In certain alternative embodiments, the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

The terminology used herein is for the purpose of describing some embodiments only and is not intended to be limiting of the embodiments of the invention. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include/s", "having", "has", "with", "comprised of', or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the general inventive concept.

## Claims

1. A method of adapting a polling decision in a database system, the database system comprising an original data source storing pieces of original data and a cache source storing pieces of cached data, each piece of cached data being associated with a value indicating a probability that the piece of cached data coincides with a corresponding piece of original data, the value being derived from a probabilistic model, the polling decision indicating based on the value whether the piece of cached data is to be used or whether the corresponding piece of original data is to be polled from the original data source, the method comprising:
processing a plurality of queries by the database system, the plurality of queries comprising a plurality of search queries to search for pieces of data in accordance with the polling decision and a plurality of modification queries to modify pieces of the original data in the original data source;
selecting search queries from among the plurality of search queries;
for each of the search queries selected:
retrieving a first piece of the cached data matching the selected search query from the cache source;
retrieving a first piece of the original data matching the selected search query from the original data source; and
determining whether the first piece of the cached data coincides with the first piece of the original data;
selecting modification queries from among the plurality of modification queries;
for each of the modification queries selected:
determining whether the selected modification query is associated with a search query from among the selected search queries for which it was determined that the first piece of the cached data does not coincide with the first piece of the original data; and
adapting the probabilistic model based on the results of the determinations with respect to the selected modification queries using a machine learning algorithm.

2. The method of claim 1, wherein if it is determined that the selected modification query is associated with a search query from among the selected search queries for which it was determined that the first piece of the cached data does not coincide with the first piece of the original data, the probabilistic model is adapted such that the polling decision indicates that the piece of original data matching said search query is to be polled from the original data source.

3. The method of claim 1 or 2, wherein if it is determined that the selected modification query is associated with a search query from among the selected search queries for which it was determined that the first piece of the cached data coincides with the first piece of the original data, the probabilistic model is adapted such that the polling decision indicates that the piece of cached data matching said search query is to be used.

4. The method of any of claims 1 to 3, wherein the search queries from among the plurality of search queries are selected randomly, at the time the respective search query is received from a client.

5. The method of claim 4, further comprising, for each of the search queries selected:
evaluating the value of the first piece of the cached data;
if the value is below a given threshold, updating the first piece of the cached data by the first piece of the original data, and returning the first piece of the original data as a result to the client; and
otherwise, returning the first piece of the cached data as the result to the client.

6. The method of claim 5, further comprising, for each of the search queries not selected:
retrieving a second piece of the cached data matching the not-selected search query from the cache source;
evaluating the value of the second piece of the cached data;
if the value is below the given threshold,
retrieving a second piece of the original data matching the non-selected search query from the original data source, and
updating the second piece of the cached data by the second piece of the original data; and
adapting the probabilistic model based on the first pieces of the cached and original data using the machine learning algorithm.

7. The method of claim 6, further comprising:
if the value is below the given threshold, returning the second piece of the original data as a result to the client; and
otherwise, returning the second piece of the cached data as the result to the client.

8. The method of any of claims 1 to 7, wherein adapting the probabilistic model comprises adapting the probabilistic model based on the results of the determinations with respect to the selected search queries using the machine learning algorithm.

9. The method of claim 8, wherein if it is determined for the selected search query that the first piece of the cached data coincides with the first piece of the original data and if it is determined that the selected search query is not associated with one of the plurality of modification queries, the probabilistic model is adapted such that the polling decision indicates that the piece of cached data matching said search query is to be used.

10. The method of any of claims 1 to 9, wherein each modification query of the plurality of modification queries is associated with at least one of the plurality of search queries.

11. The method of any of claims 1 to 10, further comprising, for each selected modification query:
determining a search query from among the plurality of search queries that is associated with the selected modification query;
retrieving a third piece of the cached data matching the determined search query from the cache source;
retrieving a third piece of the original data matching the determined search query from the original data source;
determining whether the third piece of the cached data coincides with the third piece of the original data; and
if it is determined that the third piece of the cached data does not coincide with the third piece of the original data, adapting the probabilistic model using the machine learning algorithm.

12. The method of any of claims 1 to 11, wherein determining whether the selected modification query is associated with the search query from among the selected search queries comprises one or more of the following:
determining that the selected modification query and the search query are received from the same client;
determining that the selected modification query is received within a given time period from the search query;
determining whether the selected modification query comprises information associated with one or more search terms of the search query; and
determining whether the selected modification query comprises information identifying the search query.

13. An apparatus in a database system, the database system comprising an original data source storing pieces of original data and a cache source storing pieces of cached data, each piece of cached data being associated with a value indicating a probability that the piece of cached data coincides with a corresponding piece of original data, the value being derived from a probabilistic model, the polling decision indicating based on the value whether the piece of cached data is to be used or whether the corresponding piece of original data is to be polled from the original data source, the apparatus comprising:
at least one processor; and
a memory including instructions that, when executed by the at least one processor, cause the apparatus to:
process a plurality of queries, the plurality of queries comprising a plurality of search queries to search for pieces of data in accordance with the polling decision and a plurality of modification queries to modify pieces of the original data in the original data source;
select search queries from among the plurality of search queries;
for each of the search queries selected:
retrieve a first piece of the cached data matching the selected search query from the cache source;
retrieve a first piece of the original data matching the selected search query from the original data source; and
determine whether the first piece of the cached data coincides with the first piece of the original data;
select modification queries from among the plurality of modification queries;
for each of the modification queries selected:
determine whether the selected modification query is associated with a search query from among the selected search queries for which it was determined that the first piece of the cached data does not coincide with the first piece of the original data; and
adapt the probabilistic model based on the results of the determinations with respect to the selected modification queries using a machine learning algorithm.

14. A computer program product comprising instructions which, when executed by a computer, cause the computer to perform the method according to any one of claims 1 to 12.

15. A computer-readable medium having stored thereon the computer program product of claim 14.
